# EUROPÄISCHE PATENTSCHRIFT

(11) **EP 0 873 513 B1**
(45) Veröffentlichungstag und Bekanntmachung des Hinweises auf die Patenterteilung: **02.07.2008**
(21) Anmeldenummer: 97910225.8
(22) Anmeldetag: 26.09.1997
(51) Int. Cl.: G01N 27/407

(54) **DICHTELEMENT FÜR MESSFÜHLER**
SEALING ELEMENT FOR A SENSOR
ELEMENT D'ETANCHEITE POUR CAPTEUR

(30) Priorität: 10.10.1996 DE 19641809
(43) Veröffentlichungstag der Anmeldung: 28.10.1998
(73) Patentinhaber: ROBERT BOSCH GMBH, 70442 Stuttgart (DE)
(72) Erfinder: FRIESE, Karl-Hermann, D-71229 Leonberg (DE); WEYL, Helmut, D-71701 Schwieberdingen (DE); WIEDENMANN, Hans-Martin, D-70195 Stuttgart (DE); HANS, Anton, D-70435 Stuttgart (DE)
(86) Internationale Anmeldenummer: PCT/DE1997/002197
(87) Internationale Veröffentlichungsnummer: WO 1998/015820

(56) Entgegenhaltungen:
- DE-A- 4 342 731
- DE-A- 4 447 306
- DE-U- 9 409 684
- R. G. DELAGI ET AL: "High-aluminum ferritic stainless alloys synthesized for catalytic converters" ADVANCED MATERIALS & PROCESSES, Bd. 147, Nr. 1, Januar 1995, Seiten 27-28, XP002052744

## Beschreibung

### Stand der Technik

Die Erfindung geht aus von einem Meßfühler nach dem Oberbegriff des Anspruches 1. Meßfühler gemäß dem Oberbegriff des Anspruches 1 haben einen Festelektrolytkörper, der zum Beispiel als geschlossenes Rohr ausgeführt und in einem metallischen Gehäuse dicht festgelegt ist. Zwischen Festelektrolytkörper und Gehäuse muß eine Dichtung realisiert sein.

Aus der DE-OS 43 42 731 sind Meßfühler auf Festelektrolytbasis bekannt, bei denen zur dichten Fixierung des Festelektrolytkörpers im Gehäuse elektrisch leitende Metall- bzw. Graphitdichtringe verwendet werden. Die Metalldichtringe sind darüberhinaus oft mit einer galvanisch abgeschiedenen Kupferschicht bedeckt. Dies führt bei erhöhten Temperaturen zur Oxidation und Korrosion der Metall- bzw. Graphitoberfläche. Darüberhinaus kann es zu Diffusion der dabei entstehenden Metallionen in den Festkörperelektrolyten führen, bzw. in Schichten, die auf der Oberfläche des Festkörperelektrolyten angeordnet sind, wie Leiterbahnen, Abdeckschichten und Isolationsschichten. Dies verändert und beeinträchtigt dessen Eigenschaften im Hinblick auf seine störungsfreie Funktion.

Aus der DE 94 09 684 U1 ist ein Messfühler bekannt, der einen Dichtring aus Stahl mit einer beidseitig aufgebrachten duktilen Schicht aus Ni oder Kupfer aufweist.

### Vorteile der Erfindung

Der erfindungsgemäße Meßfühler mit den kennzeichnenden Merkmalen des Hauptanspruches hat den Vorteil, daß zur Abdichtung des keramischen Körpers temperatur- und korrosionsbeständige Dichtelemente eingesetzt werden können, die eine walzplattierte, sehr duktile Oberflächenschicht aus einem Metall aufweisen. Durch die Verformbarkeit der kompakten Dichtung legt sich das Dichtelement spielfrei insbesondere an die Oberfläche des keramischen Körpers an. Dadurch wird gewährleistet, daß auch unter extremen thermischen Bedingungen keine korrosiven Substanzen an den rückwärtigen Teil des Festelektrolytkörpers und die dort angeordneten Kontakte gelangen und deren Eigenschaften beeinträchtigen. Gegenüber herkömmlichen, galvanisch aufgebrachten Metallschichten haben walzplattierte Metallschichten neben ihrer erhöhten Duktilität den Vorteil, daß sie eine gleichförmigere Oberflächenstruktur aufweisen, keine Fehlstellen besitzen und eine gleichmäßige Schichtdicke haben. Sie sind darüberhinaus viel höher verdichtet, was die Oberfläche für den Sauerstoffzutritt reduziert. Dies führt zu einer weitaus niedrigeren Leckrate für Dichtungen, die Dichtringe mit walzplattierte Metallschichten verwenden als für Dichtringe mit Metallschichten, die galvanisch aufgebracht wurden. Ein weiterer Vorteil walzplattierter Schichten besteht in dem höheren Automatisierungsgrad bei ihrer Herstellung verglichen mit galvanisch aufgebrachten Schichten und einer damit einhergehenden kontinuierlichen Schichtdickenprozeßkontrolle. Dies führt zu einer exakt reproduzierbaren Qualität mit sehr engen Toleranzen der derart produzierten Dichtringe. Dadurch können insbesondere die Kosten pro Stück entscheidend gesenkt werden.

Durch die in den Unteransprüchen aufgeführten Maßnahmen sind vorteilhafte Weiterbildungen und Verbesserungen des erfindungsgemäßen Meßfühlers möglich. Eine zusätzlich walzplattierte Nickelschicht, die unterhalb der Kupferschicht aufgebracht ist und zur Keramik hinweist, ermöglicht eine noch größere Duktilität der kombinierten Kupfer und Nickelschicht, die die Rautiefe (Rₘₐₓ nach DIN 4768) und die Formabweichung des Keramikkörpers ausgleicht. Eine teilweise Oxidation der Kupferschicht ist erwünscht, um die Dichtigkeit des Dichtrings noch zu erhöhen. Dies wird durch eine thermische Vorbehandlung, vorzugsweise bei ungefähr 550° erreicht.

### Zeichnung

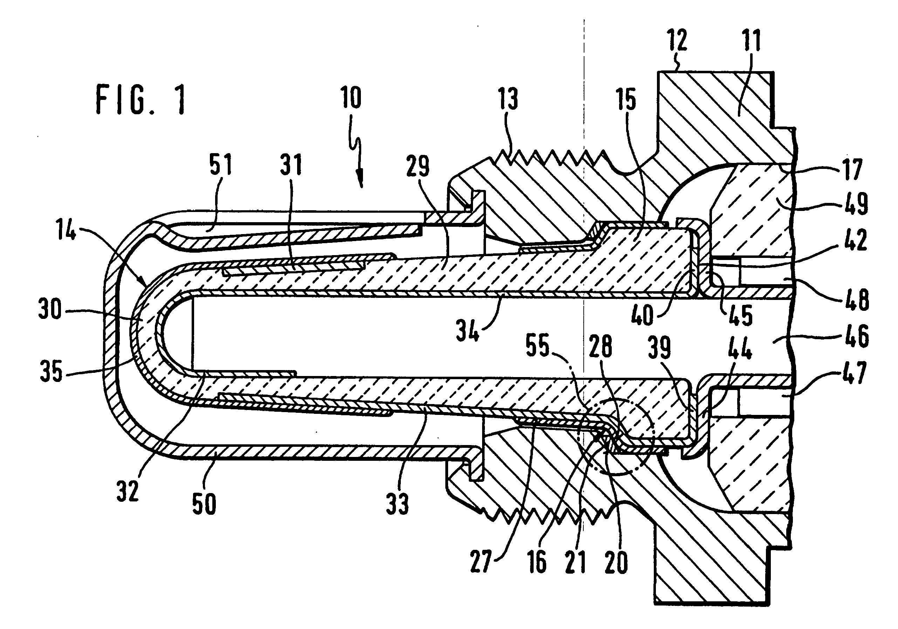

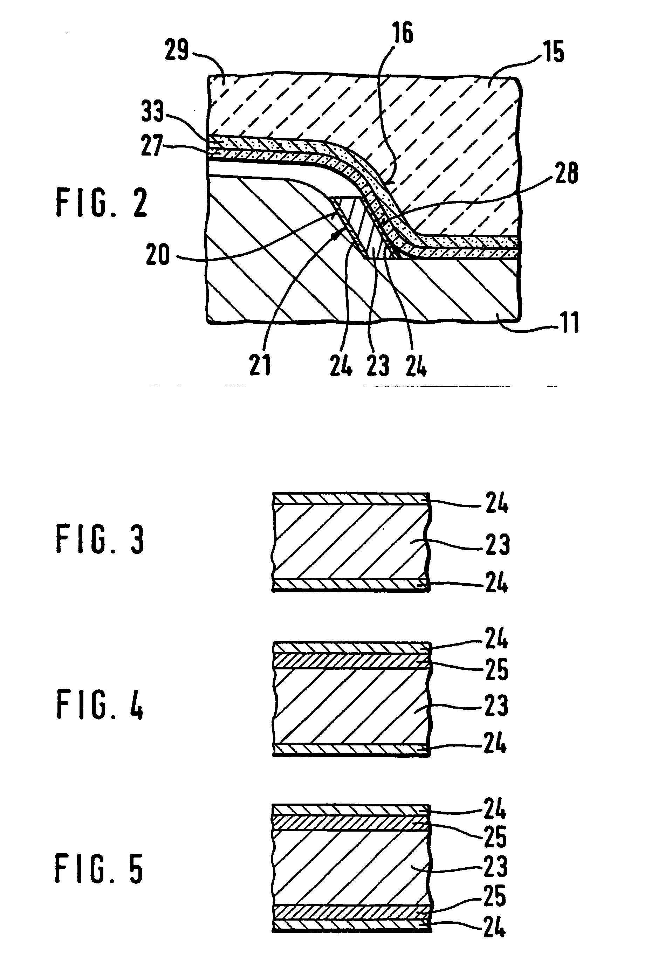

Ausführungsbeispiele der Erfindung sind in der Zeichnung dargestellt und in der nachfolgenden Beschreibung näher erläutert. Es zeigen Figur 1 einen Längsschnitt durch den abgasseitigen Teil eines Meßfühlers, Figur 2 einen vergrößerten Ausschnitt einer Dichtzone gemäß Figur 1, Figur 3 ein erfindungsgemäßes Dichtelement mit einer auf beiden Seiten aufgebrachten walzplattierten Kupferschicht, Figur 4 ein Dichtelement mit einer zusätzlichen unter die walzplattierte Kupferschicht aufgebrachte walzplattierte Nickelschicht und Figur 5 ein Dichtelement mit einer zusätzlichen walzplattierten Nickelschicht, die unter die beiden walzplattierten Kupferschichten aufgebracht ist.

### Ausführungsbeispiele

Der in Figur 1 dargestellte elektrochemische Meßfühler 10 hat ein metallisches Gehäuse 11, das an seiner Außenseite einen Schlüsselsechskant 12 und ein Gewinde 13 als Befestigungsmittel für den Einbau in ein nicht dargestelltes Meßgasrohr aufweist. Das Gehäuse 11 hat eine Längsbohrung 17 mit einem Dichtsitz 20, welcher einen Dichtring 21 trägt. Auf dem mit dem Dichtring 21 versehenen Dichtsitz 20 liegt ein Sensorelement 14 mit einer an einem wulstförmigen Kopf 15 ausgebildeten Schulter 16 auf. Am wulstförmigen Kopf 15 des Sensorelements 14 bildet sich zwischen Dichtring 21 und Sensorelement 14 eine sensorelementseitige Dichtfläche 28 aus. Der Dichtsitz 20 bildet seinerseits eine gehäuseseitige Dichtfläche. Die sich am Dichtring 21 ausbildende Dichtzone 55 ist in der Figur 2 vergrößert dargestellt.

Das Sensorelement 14 ist im vorliegenden Ausführungsbeispiel eine an sich bekannte Sauerstoffsonde, die bevorzugter Weise für das Messen des Sauerstoffpartialdrucks in Abgasen Verwendung findet. Das Sensorelement 14 hat einen rohrförmigen Festelektrolytkörper 29, dessen meßgasseitiger Endabschnitt mittels eines Bodens 30 verschlossen ist. Auf der dem Meßgas ausgesetzten Außenseite ist auf dem Festelektrolytkörper 29 eine schichtförmige, gasdurchlässige Meßelektrode 31 und auf der dem Innenraum zugewandten Seite eine einem Referenzgas, zum Beispiel Luft, ausgesetzte, gasdurchlässige und schichtförmige Referenzelektrode 32 angeordnet. Die Meßelektrode 31 wird mit einer Meßelektrodenleiterbahn 33 zu einem ersten Elektrodenkontakt 39 und die Referenzelektrode 32 mit einer Referenzelektrodenleiterbahn 34 zu einem zweiten Elektrodenkontakt 40 geführt. Die Elektrodenkontakte 39, 40 befinden sich jeweils auf einer vom offenen Ende des Festelektrolytkörpers 29 gebildeten Stirnfläche 42. Über die Meßelektrode 31 und teilweise über die Meßelektrodenleiterbahnen 33 ist eine poröse Schutzschicht 35 gelegt. Die Elektroden 31, 32 und die Leiterbahnen 33, 34 sind vorteilhafter Weise als Cermetschichten aufgebaut und kogesintert.

Das meßgasseitig aus der Längsbohrung 18 des Gehäuses 11 herausragende Sensorelement 14 ist mit Abstand von einem Schutzrohr 50 umgeben, welches für den Ein- bzw. Austritt des Meßgases Öffnungen 51 besitzt, und am meßgasseitigen Ende des Gehäuses 11 gehalten ist. Der Innenraum des Sensorelements 14 ist beispielsweise durch ein stabförmiges Heizelement 46 ausgefüllt, welches, nicht dargestellt, meßgasfern arretiert und mit Leitungsanschlüssen versehen ist.

Auf dem ersten Elektrodenkontakt 39 liegt ein erstes Kontaktteil 44 und auf dem zweiten Elektrodenkontakt 40 ein zweites Kontaktteil 45 auf. Die Kontaktteile 44, 45 sind so geformt, daß sie am rohrförmigen Heizelement 46 anliegen und mit einem Meßelektrodenanschluß 47 und einem Referenzelektrodenanschluß 48 kontaktiert sind. Die Anschlüsse 47, 48 werden mit nicht dargestellten Anschlußkabeln kontaktiert und nach außen zu einem Meß- oder Steuergerät geführt. In der Längsbohrung 17 des Gehäuses 11 ist ferner eine Isolierhülse 49 eingebracht, welche bevorzugt aus einem keramischen Material besteht. Mit Hilfe eines nicht dargestellten mechanischen Mittels wird die Isolierhülse 49 auf die Kontaktteile 44, 45 gedrückt, wodurch die elektrische Verbindung zu den Elektrodenkontakten 39 und 40 erzeugt wird.

Eine deutliche Darstellung der Dichtzone 55 zwischen dem Festelektrolytkörper 29 und dem Gehäuse 11 geht aus der Figur 2 hervor. Zum Schutz der Leiterbahn 33 wird gemäß Figur 2 im Bereich der sensorelementseitigen Dichtfläche 28 diese mit einer zusätzlich schützenden Abdeckschicht 27 bedeckt. Die Abdeckschicht 27 besitzt eine Schichtdicke von 20 bis 100 µm. Im vorliegenden Ausführungsbeispiel ist die Abdeckungsschicht 27 über den gesamten Bereich der Leiterbahn 33 und um den Umfang des Festelektrolytkörpers 29 gezogen, der dem Gehäuse 11 benachbart ist. Es ist aber genauso denkbar, die Abdeckschicht 27 nur auf den Bereich der Dichtfläche 28 zu beschränken, bzw. die Abdeckschicht 27 meßgasseitig bis hin zur Schutzschicht 35 auszudehnen, was vorteilhaft ist, da dadurch verunreinigungen durch Ruß und/oder andere leitfähige Ablagerungen aus dem Abgas vermieden werden. Die Schutzschicht 35 besteht zum Beispiel aus plasmagespritztem Magnesiumspinell.

Das Material der Abdeckschicht 27 wird so gewählt, daß es den Druckkräften des Dichtrings 21 standhält, die beim Fügen des Sensorelements 14 im Gehäuse 11 auftreten. Darüberhinaus muß es Anwendungstemperaturen bis 700° C standhalten. Dies wird dadurch erreicht, daß ein kristallines, nicht metallisches Material in homogener Verteilung ein tragendes Schutzgerüst in einer Glasurschicht bildet und die Transformationstemperatur der Glasur oberhalb der Anwendungstemperatur liegt. Als Material kommen in Frage: Al₂O₃, Magnesiumspinell, Forsterit, MgO-stabilisiertes ZrO₂, Cr₂O₃ und/oder Y₂O₃-stabilisiertes ZrO₂ mit geringen Stabilisatorgehalten, vorteilhaft mit maximal zwei Dritteln des Stabilisatoroxids der Vollstabilisierung, nicht stabilisiertes ZrO₂ oder HfO₂ oder ein Gemisch dieser Stoffe. Als glasbildendes Material wird ein Erdalkalisilikat, beispielsweise Bariumaluminiumsilikat eingesetzt. Bariumaluminiumsilikat hat einen thermischen Ausdehnungskoeffizienten von ≥ 8,5 x 10⁻⁶ k⁻¹. Bis zu 30 % der Ba²⁺ Kationen können durch Sr²⁺ ersetzt werden.

Zur Realisierung einer gasdichten Befestigung des Sensorelements 14 im Gehäuse 11 sitzt die am wulstförmigen Kopf 15 ausgebildete Schulter 16 mittels des Dichtrings 21 auf dem Gehäuse 11 auf. Um den Innenraum des Sensorelements 14 abzudichten, besteht der Dichtring 21 gemäß Figur 2 und 3 aus einem einen Träger bildenden massiven Kern 23 aus einer Eisen-Chrom oder Eisen-Chrom-Nickel-Legierung, vorzugsweise aus Eisen-22-Chrom-MM-Edelstahl mit einer Dicke von ungefähr 0,5 mm, der auf jeder Seite von einer mindestens 0,05 mm, vorzugsweise 0,1 bis 0,2 mm, dicken walzplattierten Kupferschicht 24 bedeckt ist. Das walzplattierte Material ist wegen seiner hohen Verdichtung besonders gas- wasser- und kraftstoffundurchlässig.

Ein Ausführungsbeispiel für den Dichtring 21, der aus mehreren verschiedenen Metallschichten aufgebaut ist, zeigt Figur 4. Danach ist beispielsweise unter einer der beiden walzplattierten Kupferschichten 24 eine zusätzliche Metallschicht 25 aus Nickel aufgetragen. Die Nickelschicht 25 wird ebenfalls durch Walzplattieren aufgetragen. Die Dicke der Nickelschicht 25 beträgt beispielsweise 0,1 mm. Figur 5 zeigt ein weiteres Ausführungsbeispiel für den Dichtring 21, der aus mehreren verschiedenen Metallschichten aufgebaut ist. Danach ist unter jeder der beiden walzplattierten Kupferschichten 24 eine zusätzliche Metallschicht 25 aus Nickel aufgetragen. Beide zusätzliche Nickelschichten 25 werden ebenfalls durch Walzplattieren aufgetragen. Die Dicke der zusätzlichen Nickelschichten 25 beträgt ebenfalls ungefähr 0,1 mm.

In einem weiteren, nicht dargestellten Ausführungsbeispiel wird auf die walzplattierte Kupferschicht 24 in einem an sich bekannten stromlosen Metallisierungsverfahren eine weitere Metallschicht aus Ni oder Pd mit einer Dicke von 0.1-1 µm abgeschieden. Anschließend wird der Dichtring 21 thermisch behandelt, so daß im Falle der aufgebrachten Nickelschicht diese mit der darunterliegenden Kupferschicht 24 zu einer Schicht hoch korrosionsbeständigen Monelmetalles reagiert.

## Patentansprüche

1. Messfühler, insbesondere zur Bestimmung des Sauerstoffgehaltes in Abgasen von Verbrennungsmotoren, mit einem keramischen Körper (29), der mit einem Dichtelement (21) in ein Gehäuse eingesetzt ist, wobei das Dichtelement (21) einen metallischen Träger (23) aufweist, bei dem zumindest die den keramischen Körper (14, 29) berührende Fläche mit mindestens einer Metallschicht (24, 25) versehen ist, **dadurch gekennzeichnet, dass** die Metallschicht (24, 25) eine walzplattierte Metallschicht ist.

2. Messfühler nach Anspruch 1, **dadurch gekennzeichnet, dass** die Metallschicht (24) aus Kupfer oder einer Kupferlegierung besteht.

3. Messfühler nach Anspruch 1, **dadurch gekennzeichnet, dass** unterhalb der Metallschicht (24) eine Nickelschicht (25) aufgebracht ist.

4. Messfühler nach Anspruch 1, **dadurch gekennzeichnet, dass** auf der Metallschicht (24) eine zusätzliche Schicht aus Ni oder Pd aufgebracht ist, die wärmebehandelt mit der Metallschicht (24), im Falle der Nickelschicht, zu einer Schicht Monelmetall reagiert.

5. Messfühler nach Anspruch 1, **dadurch gekennzeichnet, dass** das Dichtelement (21) an der den keramischen Körper (14, 29) und zu der das Gehäuse (11) berührenden Fläche mit der Metallschicht (24) versehen ist.

6. Messfühler nach Anspruch 5, **dadurch gekennzeichnet, dass** an der den keramischen Körper (14, 29) und/oder an der das Gehäuse (11) berührenden Seite unter der Metallschicht (24) eine Nickelschicht (25) angeordnet ist.

7. Messfühler nach einem der vorangegangenen Ansprüche, **dadurch gekennzeichnet, dass** die Metallschicht (24) eine Schichtdicke von maximal 0,5 mm aufweist.

8. Messfühler nach einem der Ansprüche 3 oder 6, **dadurch gekennzeichnet, dass** die Dicke der Nickelschicht (25) maximal 0,2 mm beträgt.

9. Messfühler nach einem der vorangegangenen Ansprüche, **dadurch gekennzeichnet, dass** der metallische Träger (23) ein Dichtring (21) mit zwei Stirnflächen ist.

10. Messfühler nach Anspruch 9, **dadurch gekennzeichnet, dass** die Metallschicht (24, 25) an mindestens einer der beiden Stirnflächen ausgebildet ist.

11. Messfühler nach einem der vorangegangenen Ansprüche, **dadurch gekennzeichnet, dass** der metallische Träger (23) aus einer korrosions- und/oder temperaturbeständigen Stahllegierung, vorzugsweise Fe-Cr, Fe-Cr-V, Fe-Cr-Mo, Fe-Cr-Ni, besteht.

12. Verfahren zur Herstellung eines Messfühlers, insbesondere zur Bestimmung des Sauerstoffgehaltes in Abgasen von Verbrennungsmotoren, nach einem der Ansprüche 1 bis 10, **dadurch gekennzeichnet, dass** die walzplattierte Metallschicht (24) einer thermischen Vorbehandlung unterzogen wird, so dass deren Oberfläche zumindest teilweise oxidiert wird.

## Claims

1. Measuring sensor, in particular for determining the oxygen content in exhaust gases of internal combustion engines, comprising a ceramic body (29), which is fitted with a sealing element (21) in a housing, the sealing element (21) having a metal support (23), wherein at least the surface that is in contact with the ceramic body (14, 29) is provided with at least one metal layer (24, 25), **characterized in that** the metal layer (24, 25) is a roll-clad metal layer.

2. Measuring sensor according to Claim 1, **characterized in that** the metal layer (24) consists of copper or a copper alloy.

3. Measuring sensor according to Claim 1, **characterized in that** a nickel layer (25) is applied under the metal layer (24).

4. Measuring sensor according to Claim 1, **characterized in that** an additional layer of Ni or Pd is applied on the metal layer (24), which additional layer reacts under heat treatment with the metal layer (24), in the case of the nickel layer to form a layer of Monel metal.

5. Measuring sensor according to Claim 1, **characterized in that** the sealing element (21) is provided with the metal layer on the surface that is in contact with the ceramic body (14, 29) and on the surface that is in contact with the housing (11).

6. Measuring sensor according to Claim 5, **characterized in that** a nickel layer (25) is arranged under the metal layer (24) on the side that is in contact with the ceramic body (14, 29) and/or on the side that is in contact with the housing (11).

7. Measuring sensor according to one of the preceding claims, **characterized in that** the metal layer (24) has a layer thickness of at most 0.5 mm.

8. Measuring sensor according to either of Claims 3 and 6, **characterized in that** the thickness of the nickel layer (25) is at most 0.2 mm.

9. Measuring sensor according to one of the preceding claims, **characterized in that** the metallic support (23) is a sealing ring (21) with two end faces.

10. Measuring sensor according to Claim 9, **characterized in that** the metal layer (24, 25) is formed on a least one of the two end faces.

11. Measuring sensor according to one of the preceding claims, **characterized in that** the metallic support (23) consists of a corrosion- and/or temperature-resistant steel alloy, preferably Fe-Cr, Fe-Cr-V, Fe-Cr-Mo or Fe-Cr-Ni.

12. Method for producing a measuring sensor, in particular for determining the oxygen content in exhaust gases of internal combustion engines, according to one of Claims 1 to 10, **characterized in that** the roll-clad metal layer (24) is subjected to a thermal pretreatment, so that its surface is at least partially oxidized.

## Revendications

1. Capteur notamment pour déterminer la teneur en oxygène des gaz d'échappement de moteurs à combustion interne comportant un corps en céramique (29) logé avec un élément d'étanchéité (21) dans un boîtier,
l'élément d'étanchéité (21) ayant un support métallique (23) et au moins la surface touchant le corps en céramique (14, 29) est munie d'une couche métallique (24, 25),
**caractérisé en ce que**
la couche métallique (24, 25) est une couche de métal plaquée par laminage.

2. Capteur selon la revendication 1,
**caractérisé en ce que**
la couche métallique (24) est du cuivre ou un alliage de cuivre.

3. Capteur selon la revendication 1,
**caractérisé par**
une couche de nickel (25) sous la couche de métal (24).

4. Capteur selon la revendication 1,
**caractérisé par**
une couche supplémentaire de Ni ou Pd appliquée sur la couche de métal (24), et cette couche appliquée subit un traitement thermique avec la couche métallique (24) pour réagir dans le cas d'une couche de nickel et former une couche de monel.

5. Capteur selon la revendication 1,
**caractérisé en ce que**
l'élément d'étanchéité (21) est muni d'une couche métallique (24) sur la surface en contact avec le corps en céramique (14, 29) et le boîtier (11).

6. Capteur selon la revendication 5,
**caractérisé en ce que**
le côté sous la couche métallique (24) en contact avec le corps en céramique (14, 29) et/ou le boîtier (11) comporte une couche de nickel (25).

7. Capteur selon l'une des revendications précédentes,
**caractérisé en ce que**
la couche métallique (24) a une épaisseur de couche au maximum de 0,5 mm.

8. Capteur selon l'une des revendications 3 ou 6,
**caractérisé en ce que**
l'épaisseur de la couche de nickel (25) est au plus de 0,2 mm.

9. Capteur selon l'une des revendications précédentes,
**caractérisé en ce que**
le support métallique (23) est une bague d'étanchéité (21) ayant deux surfaces frontales.

10. Capteur selon la revendication 9,
**caractérisé en ce que**
la couche métallique (24, 25) est réalisée sur au moins l'une des deux surfaces frontales.

11. Capteur selon l'une des revendications précédentes,
**caractérisé en ce que**
le support métallique (23) est en un alliage résistant à la corrosion et/ou à la température, de préférence Fe-Cr, Fe-Cr-V, Fe-Cr-Mo, Fe-Cr-Ni.

12. Procédé de fabrication d'un capteur notamment pour déterminer la teneur en oxygène des gaz d'échappement de moteurs à combustion interne selon l'une des revendications 1 à 10,
**caractérisé en ce que**
la couche métallique (24) plaquée par laminage est soumise à un traitement thermique préalable de façon que sa surface soit au moins en partie oxydée.
